# EUROPÄISCHE PATENTSCHRIFT

(11) **EP 2 668 863 B1**
(45) Veröffentlichungstag und Bekanntmachung des Hinweises auf die Patenterteilung: **19.04.2017**
(21) Anmeldenummer: 13002804.6
(22) Anmeldetag: 30.05.2013
(51) Int. Cl.: A44B 18/00, B60P 7/08

(54) **Ladungssicherungselement**
Load securing element
Elément de sécurisation de charge

(30) Priorität: 30.05.2012 DE 102012010609
(43) Veröffentlichungstag der Anmeldung: 04.12.2013
(73) Patentinhaber: Fahrzeugwerk Bernard Krone GmbH, 48480 Spelle (DE)
(72) Erfinder: Baufeld,Torsten, 49757 Werlte (DE); Möhlenkamp, Wilhelm, 49757 Werlte (DE)
(74) Vertreter: Pott, Ulrich

(56) Entgegenhaltungen:
- DE-U1-202011 104 256
- US-A1- 2003 093 884
- US-A1- 2003 201 377
- US-A1- 2004 115 020
- US-B2- 8 099 836

## Beschreibung

Die Erfindung bezieht sich auf ein Ladungssicherungselement, insbesondere Ladungssicherungsgurt, zur Sicherung einer Ladung auf beispielsweise Lastfahrzeugen, das an seinen im montierten Zustand einer Ladefläche zugewandten Endbereichen mit Verbindungselementen zur Festlegung des Ladungssicherungselementes an einer Halterung an der Ladefläche versehen ist, wobei mit Lageabstand (R) in Längsrichtung des Ladungssicherungselementes zu einem der Endbereiche zumindest ein zusätzlicher Verbinder an dem Ladungssicherungselement festgelegt ist, über den das Ladungssicherungselement mit einem Abstand zu dem zugeordneten Endbereich des Ladungssicherungselementes an der Halterung der Ladefläche befestigbar ist und wobei der im montierten Zustand der Ladefläche zugewandte Endbereich als geschlossenes Ösenauge ausgebildet ist.

Ladungssicherungselemente der vorgenannten Art sind allgemein bekannt und sind insbesondere als Ladungssicherungsgurte ausgebildet, die zur Sicherung einer Ladung auf einer Ladefläche beispielsweise eines Fahrzeugaufbaus eines Nutzfahrzeuges zu spannen sind. Dabei sind diese in Querrichtung zur Ladefläche, aber auch in Längs- oder Diagonalrichtung zur Ladefläche vorzusehen. Mit ihren jeweiligen Enden und den vorgesehenen Verbindungselementen sind diese bevorzugt an einer Halterung, beispielsweise in Gestalt einer Halterungsleiste festzulegen, indem sie dort beispielsweise in entsprechende Lochausnehmungen über Verbindungshaken einzuhängen sind. In einem solchen Fall sind die Ladungssicherungselemente allerdings nicht gegen ein Verlieren geschützt, sondern sind individuell in entsprechende Lochausnehmungen einzuhängende Ladungssicherungselemente, die bei Nichtgebrauch an besonderer Stelle zu bevorraten sind. Dies führt im Alltagsbetrieb zu einem nicht unerheblichen Verlust solcher Ladungssicherungselemente.

Es ist daher vorgeschlagen worden, solche Ladungssicherungselemente gegen diesen Verlust zu schützen und diese fest an der entsprechenden Halterung der Ladefläche vorzusehen. Dazu können die Enden der Ladungssicherungselemente beispielsweise als Ösenaugen ausgebildet werden, die von einem Befestigungselement durchsetzt werden und beispielsweise mit der Halterung zu verschrauben sind. Damit ist jedoch der Ort und die Stelle, wo die Sicherungselemente an der Ladefläche vorzusehen sind, vorgegeben, was der Flexibilität hinsichtlich der Anordnung der zu sichernden Ladung auf der Ladefläche entgegensteht.

Aus den Dokumenten US 2003/093884 A1, der US 2003/201377 A1 und der US 2004/115020 A1 ist jeweils ein Ladungssischerungselement der eingangs genannten Art bekannt. Diese haben jeweils Schäkel oder zumindest ein hakenförmiges Ende, um in entsprechende Ösen eingehängt zu werden. Damit geht das Risiko einher, dass das Ladungssicherungselement zum Beispiel auch im Falle der Nichtbenutzung verloren geht.

Es ist Aufgabe der vorliegenden Erfindung ein Ladungssicherungselement zu schaffen, dass gegen Verlierbarkeit auf der einen Seite geschützt ist, das jedoch hinsichtlich seiner Anordnung und Lage zur Sicherung einer Ladung flexibler ausgebildet ist.

Zur Lösung dieser Aufgabe zeichnet sich das Ladungssicherungselement der eingangs genannten Art dadurch aus, dass in den Endbereich ein mit der Halterung der Ladefläche verbindbares Befestigungselement einführbar ist, das mit der Halterung an der Ladefläche verschraubt ist.

Mit einem solchen Ladungssicherungselement kann auf der einen Seite das Ladungssicherungselement gegen Verlierbarkeit geschützt ortsfest an der Halerung der Ladenfläche befestigt werden, in dem es in herkömmlicher Weise mit einem Ösenauge ausgebildet ist, dass von dem Befestigungselement zu durchsetzen ist und mittels der Schraubverbindung an der Haltevorrichtung der Ladefläche angeschraubt wird. Mit einem Maximalradius und dieses Ende, das an dem Halterungselement festgelegt ist, der dem Lageabstand des zusätzlichen Verbinders zu dem jeweiligen zugeordneten Endbereich des Ladungssicherungselementes entspricht, kann jedoch der zusätzliche Verbinder an der Halterung der Ladefläche festgelegt werden, so dass bei einer seitlichen Halterung an einer Ladefläche das Sicherungselement rechts und links bzw. in Fahrtrichtung gesehen nach vorne hin oder nach hinten hin versetzt an dieser Halterung festgelegt werden kann, um dort eine Befestigungsstelle an der Halterung festzulegen, um insofern eine Halterung mit ein und demselben Ladungssicherungselement an einer anderen Stelle der Halterung an der Ladefläche vorgesehen zu haben, um bspw. dann dort die Ladung zu verspannen. Damit kann trotz der Festlegung des Ladungssicherungselementes einer gegen Verlierbarkeit geschützten Anordnung dieses Ladungssicherungselement wesentlich lageflexibler an der Ladefläche genutzt werden.

Bevorzugterweise ist der zusätzliche Verbinder als Verbindungshaken ausgebildet, beispielsweise als Drahthaken, der in einem Ösenauge an dem Ladungssicherungselement, beispielsweise an einem Ladungssicherungsgurt wie einen Spanngurt, angeordnet sein kann. Ein solcher Haken ist mit nur wenigen Handgriffen beispielsweise in einer Lochausnehmung einer seitlichen Ladeflächenbegrenzungsleiste einzuhaken. Bei Nichtgebrauch kann sich der Verbindungshaken auf den Rücken des Ladungssicherungselementes an, und zwar auf der Rückenseite, die der Ladefläche abgewandt ist, ablegen, so dass er nicht das Ladegut beschädigen kann.

Weitere vorteilhalfte Gestaltungen ergeben sich aus weiteren Unteransprüchen, der nachfolgenden Beschreibung und der Zeichnung. In der Zeichnung zeigen:
Fig. 1 ein Ausführungsbeispiel eines als Ladungssicherungsgurt aus-gebildeten Ladungssicherungselements in einer schemati-schen Seitendarstellung, das als Losende mit dem zusätzli-chen Verbinder ausgebildet ist, und
Fig. 2 eine zu Fig. 1 analoge Darstellung eines Ladungssicherungs-elementes, das als Festende mit einem zusätzlichen Verbinder ausgerüstet ist.

In der Zeichnung sind grundsätzlich übereinstimmende Teile mit übereinstimmenden Bezugsziffern versehen.

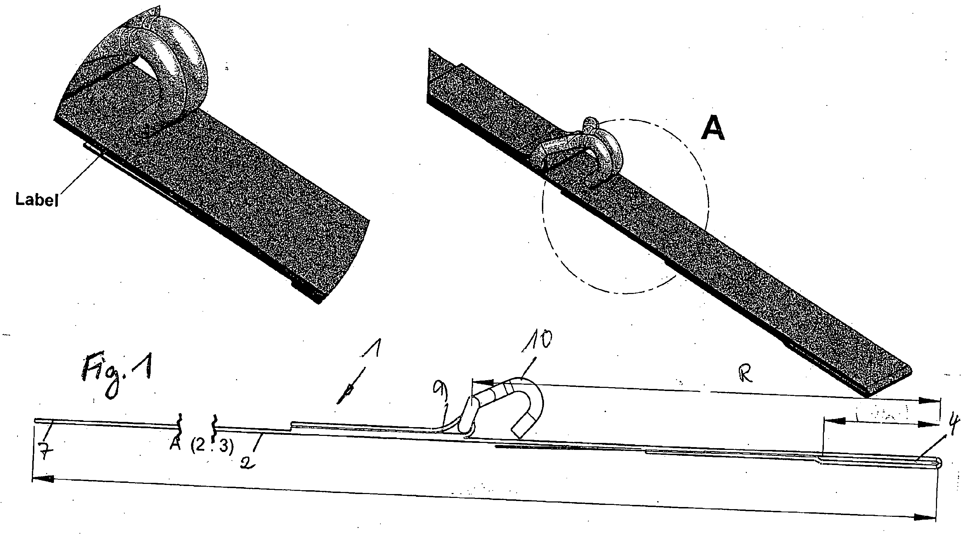

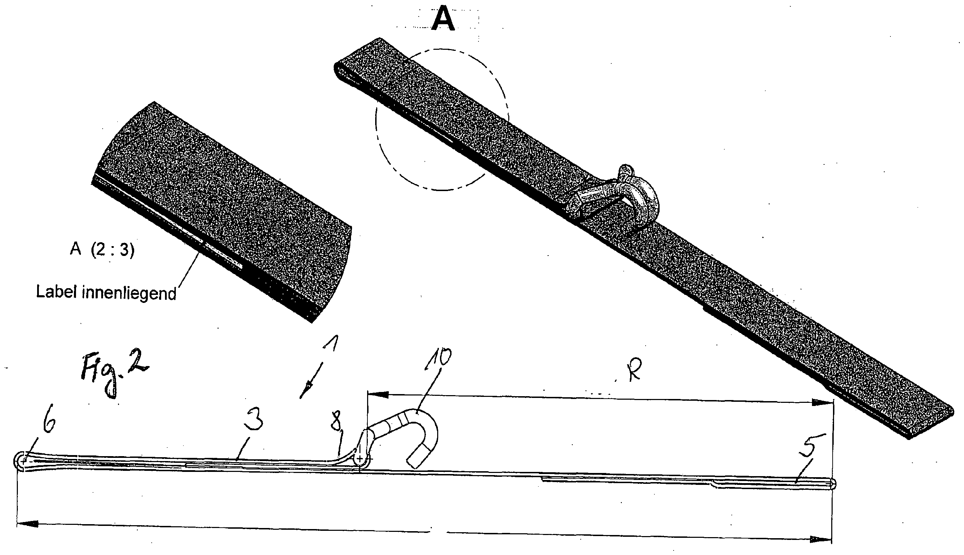

In Fig. 1 ist allgemein mit 1 ein Ladungssicherungselement in Gestalt eines Spanngurtes als Ladungssicherungsgurt beziffert, wobei in Fig. 1 das Losende 2 dieses Ladungssicherungsgurtes 1 und in Fig. 2 das Festende 3 des Ladungssicherungsgurtes 1 dargestellt ist. Sowohl das Losende 2 als auch das Festende 3 haben jeweils an ihrem Endbereich eine durch Umlegung des Ladungssicherungsgurtes und Vernähen gebildetes Ösenauge, das von einem Befestigungselement durchsetzt werden kann (nicht im Einzelnen dargestellt), das z.B. mit einer die Ladefläche eines Nutzfahrzeugaufbaus eines Nutzfahrzeuges begrenzenden Halteleiste mit mit Abstand zueinander angeordneten Lochausnehmungen und mit einem Gewinde versehenen Schraublöchern durch Schrauben an dieser Halterung (nicht gezeigt) befestigt werden kann, wonach das Losende 2 bzw. das Festende 3 ortsfest und gegen Verlierbarkeit geschützt an dieser Halterungsleiste an der Ladefläche festgelegt ist.

Das Festende 3 nach Fig. 2 hat in dem dem Endbereich 5 gegenüberliegenden Bereich ein weiteres Ösenauge 6, an dem eine Spannvorrichtung, beispielsweise eine Spannratsche befestigt werden kann, die das Losende 7 aufnimmt und über die der Ladungssicherungsgurt zu spannen ist, um beispielsweise die Ladung quer zur Fahrtrichtung der Ladefläche eines Nutzfahrzeugaufbaus zu verspannen.

Da die Enden des Ladungssicherungsgurtes 1 ortsfest an dieser Halterung festgelegt sind, kann, soweit es gewünscht ist, dieser Ladungssicherungsgurt mit Lageabstand nach vorn oder hinten (bezogen auf eine Fahrtrichtung eines Nutzfahrzeuges) an der Halterung festgelegt werden, um je nach dem, wie die Ladung auf der Ladefläche abzustellen ist, orts- bzw. lageflexibler reagieren zu können. An dem Ladungssicherungsgurt 1 ist über eine weitere Öse 8 bzw. 9 ein zusätzlicher Verbinder 10 jeweils vorgesehen, der mit dem entsprechenden Radius R bzw. Lageabstand R zur Öse 4 bzw. zur Öse 5 in einer Lochausnehmung an der Halterung der Ladefläche einzuhaken ist mit dem Ergebnis, dass dann der Ladungssicherungsgurt über die jeweiligen Verbindungshaken 10 an der Halterung der Ladefläche festgelegt worden ist und über die nicht gezeigte Spannvorrichtung weiterhin verspannt werden kann. Somit ist mit baulich äußerst einfachen Mitteln der Spanngurt wesentlich flexibler zu nutzen.

## Patentansprüche

1. Ladungssicherungselement (1), insbesondere Ladungssicherungsgurt, zur Sicherung einer Ladung auf beispielsweise Lastfahrzeugen, das an seinen im montierten Zustand einer Ladefläche zugewandten Endbereichen (4, 5) mit Verbindungselementen zur Festlegung des Ladungssicherungselementes an einer Halterung an der Ladefläche versehen ist, wobei mit Lageabstand (R) in Längsrichtung des Ladungssicherungselementes (1) zu einem der Endbereiche (4, 5) zumindest ein zusätzlicher Verbinder (10) an dem Ladungssicherungselement (1) festgelegt ist, über den das Ladungssicherungselement (1) mit einem Abstand zu dem zugeordneten Endbereich (4, 5) des Ladungssicherungselementes (1) an der Halterung der Ladefläche befestigbar ist und wobei der im montierten Zustand der Ladefläche zugewandte Endbereich (4, 5) als geschlossenes Ösenauge ausgebildet ist, **dadurch gekennzeichnet, dass** in den Endbereich (4, 5) ein mit der Halterung der Ladefläche verbindbares Befestigungselement einführbar ist, das mit der Halterung an der Ladefläche verschraubt ist.

2. Ladungssicherungselemente nach Anspruch 1, **dadurch gekennzeichnet, dass** der zusätzliche Verbinder (10) als Verbindungshaken ausgebildet ist.

3. Ladungssicherungselement nach Anspruch 2, **dadurch gekennzeichnet, dass** der Verbindungshaken als Drahthaken ausgebildet ist.

4. Ladungssicherungselement nach einem der Ansprüche 1 bis 3, **dadurch gekennzeichnet, dass** der zusätzliche Verbinder (10) in einem geschlossenen Auge (8, 9) an dem Ladungssicherungselement (1) gehaltert ist.

5. Ladungssicherungselement nach einem der Ansprüche 1 bis 4, **dadurch gekennzeichnet, dass** in Längsrichtung des Ladungssicherungselementes (1), ausgehend von einem Endbereich (4, 5) dem zusätzlichen Verbinder (10) eine Spannvorrichtung für das Ladungssicherungselement (1) nachgeordnet ist.

6. Ladungssicherungselement nach einem der Ansprüche 1 bis 5, **dadurch gekennzeichnet, dass** das Ladungssicherungselement (1) einstückig ausgebildet ist mit zwei der Ladefläche zugewandten Endbereichen (4, 5) und mit zwischen den beiden Endbereichen (4, 5) angeordneten zumindest zwei zusätzlichen Verbindern (10).

7. Ladungssicherungselement nach einem der Ansprüche 1 bis 6, **dadurch gekennzeichnet, dass** das Ladungssicherungselement (1) zweiteilig ausgebildet ist und jedes Teil des Ladungssicherungselementes (1) einen der Ladefläche zugeordneter Endbereich (4, 5) und jeweils einen mit Lageabstand (R) zu dem Endbereich (4, 5) vorgesehenen zusätzlichen Verbinder (10) aufweist.

8. Ladungssicherungselement nach Anspruch 6 oder 7, **dadurch gekennzeichnet, dass** zwischen den den beiden Endbereichen (4, 5) zugeordneten zusätzlichen Verbindern (10) ein Spannelement für das Ladungssicherungselement (1) vorgesehen ist.

9. Ladungssicherungselement nach einem der Ansprüche 1 bis 8, **dadurch gekennzeichnet, dass** das Ladungssicherungselement zumindest einenends fest mit einer Halterung der Ladefläche oder einem Teil der Ladeflächen verbunden ist.

## Claims

1. Load securing element (1), in particular load securing belt, for securing a load on goods vehicles for example, which load securing element is provided, on its end regions (4, 5) that face a load bed in the assembled state, with connecting elements for fixing the load securing element to a mounting on the load bed, at least one additional connector (10) being fixed to the load securing element (1) at a positioning distance (R) from one of the end regions (4, 5) in the longitudinal direction of the load securing element (1), by means of which additional connector the load securing element (1) can be fastened to the mounting of the load bed so as to be at a distance from the associated end region (4, 5) of the load securing element (1), and the end region (4, 5) that faces the load bed in the assembled state being formed as a closed eye, **characterised in that** a fastening element that can be connected to the mounting of the load bed can be inserted in the end region (4, 5), which fastening element is screwed to the mounting on the load bed.

2. Load securing element according to claim 1, **characterised in that** the additional connector (10) is formed as a connecting hook.

3. Load securing element according to claim 2, **characterised in that** the connecting hook is formed as a wire hook.

4. Load securing element according to any of claims 1 to 3, **characterised in that** the additional connector (10) is retained in a closed eye (8, 9) on the load securing element (1).

5. Load securing element according to any of claims 1 to 4, **characterised in that**, proceeding from an end region (4, 5), a tensioning apparatus for the load securing element (1) is arranged downstream of the additional connector (10) in the longitudinal direction of the load securing element (1).

6. Load securing element according to any of claims 1 to 5, **characterised in that** the load securing element (1) is formed in one piece, having two end regions (4, 5) that face the load bed and having at least two additional connectors (10) that are arranged between the two end regions (4, 5).

7. Load securing element according to any of claims 1 to 6, **characterised in that** the load securing element (1) is formed in two parts and each part of the load securing element (1) has one end region (4, 5) that is associated with the load bed and one additional connector (10), in each case, that is provided at a positioning distance (R) from the end region (4, 5).

8. Load securing element according to either claim 6 or claim 7, **characterised in that** a tensioning element for the load securing element (1) is provided between the additional connectors (10) that are associated with the two end regions (4, 5).

9. Load securing element according to any of claims 1 to 8, **characterised in that** the load securing element is rigidly connected, at least at one end, to a mounting of the load bed or to a part of the load bed.

## Revendications

1. Élément d'arrimage de charge (1), en particulier sangle d'arrimage de charge, destiné à arrimer une charge par exemple sur des camions, ledit élément d'arrimage de charge étant pourvu, au niveau de ses zones d'extrémité (4, 5), dirigées à l'état monté vers une plateforme de chargement, d'éléments de liaison destinés à fixer l'élément d'arrimage de charge à un support situé sur la plateforme de chargement, au moins un connecteur supplémentaire (10) étant fixé à l'élément d'arrimage de charge (1) à une distance (R) dans la direction longitudinale de l'élément d'arrimage de charge (1) par rapport à l'une des zones d'extrémité (4, 5), lequel connecteur permet de fixer l'élément d'arrimage de charge (1) au support de la plateforme de chargement en ménageant une distance par rapport à la zone d'extrémité (4, 5) associée de l'élément d'arrimage de charge (1), et la zone d'extrémité (4, 5), dirigée à l'état monté vers la plateforme de chargement, étant conçue comme un oeil fermé, **caractérisé en ce qu'**un élément de fixation, peut être relié au support, peut être introduit dans la zone d'extrémité (4, 5), lequel élément de fixation est vissé au support situé sur la plateforme de chargement.

2. Élément d'arrimage de charge selon la revendication 1, **caractérisé en ce que** le connecteur supplémentaire (10) est réalisé sous la forme d'un crochet de liaison.

3. Élément d'arrimage de charge selon la revendication 2, **caractérisé en ce que** le crochet de liaison est réalisé sous la forme d'une agrafe.

4. Élément d'arrimage de charge selon l'une des revendications 1 à 3, **caractérisé en ce que** le connecteur supplémentaire (10) est maintenu dans un oeil fermé (8, 9) au niveau l'élément d'arrimage de charge (1).

5. Élément d'arrimage de charge selon l'une des revendications 1 à 4, **caractérisé en ce qu'**un dispositif de serrage de l'élément d'arrimage de charge (1) est disposé en aval du connecteur supplémentaire (10), à partir d'une zone d'extrémité (4, 5), par référence la direction longitudinale de l'élément d'arrimage de charge (1).

6. Élément d'arrimage de charge selon l'une des revendications 1 à 5, **caractérisé en ce que** l'élément d'arrimage de charge (1) est formé d'une seule pièce et comprend deux zones d'extrémité (4, 5) dirigées vers la plateforme de chargement et au moins deux connecteurs supplémentaires (10) disposés entre les deux zones d'extrémité (4, 5).

7. Élément d'arrimage de charge selon l'une des revendications 1 à 6, **caractérisé en ce que** l'élément d'arrimage de charge (1) est réalisé en deux parties et chaque partie de l'élément d'arrimage de charge (1) comprend une zone d'extrémité (4, 5) associée à la plateforme de chargement et un connecteur supplémentaire (10) prévu à une distance (R) de la zone d'extrémité (4, 5).

8. Élément d'arrimage de charge selon la revendication 6 ou 7, **caractérisé en ce qu'**un élément de serrage de l'élément d'arrimage de charge (1) est prévu entre les connecteurs supplémentaires (10) associés aux deux zones d'extrémité (4, 5).

9. Élément d'arrimage de charge selon l'une des revendications 1 à 8, **caractérisé en ce que** l'élément d'arrimage de charge est relié au moins à une extrémité de manière fixe à un support de la plateforme de chargement ou à une partie des plateformes de chargement.
